# EUROPEAN PATENT APPLICATION

(11) **EP 3 907 088 A1**
(43) Date of publication of application: **10.11.2021**
(21) Application number: 21172532.0
(22) Date of filing: 06.05.2021
(51) Int. Cl.: B60B 29/00

(54) **A MOVER**

(30) Priority: 06.05.2020 IT 202000010063
(71) Applicant: Bellavere, Marco, 35020 Albignasego (IT)
(72) Inventor: Bellavere, Marco, 35020 Albignasego (IT)
(74) Representative: Trentin, Michele

(57) **Abstract**

A mover of at least one wheel coupled to a vehicle comprising: at least one actuator (3) for lifting the at least one wheel from the ground and at least one rotatable element (8) operatively connectable to the at least one wheel to rotate it. Such a rotatable element (8) being operatively connected to at least one motor (9) for the movement thereof. Mover (1) also comprising at least one activator (14) of the motor (9) at least to control the switching on and off thereof.

## Description

### Field of application

The present invention is applicable in the field of vehicles and, in particular, relates to devices for the control and maintenance of wheels.

More in detail, the present invention relates to a mover of wheels coupled to any vehicle.

### Background art

In general, transport means have multiple causes of deterioration and require numerous control and maintenance operations for correct and lasting operation. In particular, vehicles on tyres can encounter problems even after the inactivity thereof.

In fact, the failure to use cars or other vehicles on wheels for a long period, usually many months, leads to the ovalisation of the tyres themselves. In other words, the geometry of the wheels is altered by the loss of air in the tyres which, subjected to the weight of the vehicles themselves, change the shape thereof, assuming a crushed configuration.

Following the ovalisation of the wheels, related problems arise, such as the generation of vibrations upon steering due to the use of deformed wheels. Such vibrations necessarily affect the driver, firstly altering the driving comfort thereof and, if the use of the deteriorated wheels continues, worsening the stability of the vehicle.

The easiest solution to solve the problem of wheel ovalisation is simply to check the tyre pressure and periodically move the vehicles, even for short journeys, so as to modify the portion of the wheel on which the weight of the vehicle rests.

However, such a solution, however trivial it may be, is often not feasible as such inconveniences generally arise in cases where there are impediments to the movement of vehicles caused, for example, by the storage of the same in distant storage facilities and/or because they do not have valid circulation registrations.

To overcome such drawbacks, typically for heavy vehicles such as caravans which generally remain in storage throughout the winter period, particular shaped wedges are used which, once positioned below the wheels, are shaped to limit, if not eliminate, ovalisation.

However, even if the use of such shaped wedges limits the ovalisation of the wheels, the inactivity of vehicles for long periods causes other disadvantages thereto due to the deterioration of the stationary vehicles. Generally, in fact, in addition to the aforementioned tyres, the discs and brakes of the vehicles are also affected by wear in the form of oxidation or other.

In addition, the suspensions are also subject to deterioration as a result of long stationary periods, damage which then affects driving in the form of creaking and vibrations.

Furthermore, US 2014/050554 A1 is known which describes a wheel moving device adapted to be used in confined spaces. In particular, such a device comprises a connector shaped to move the wheel.

However, the device described in the aforementioned document allows to move a wheel only if it is decoupled from a vehicle, therefore, it is evident that this does not allow to overcome the above-mentioned drawbacks.

### Presentation of the invention

The object of the present invention is to provide a mover of wheels which allows to at least partially overcome the drawbacks highlighted above.

In particular, an object of the present invention is to provide a mover adapted to rotate wheels coupled to a vehicle.

Another object of the present invention is to provide a mover capable of eliminating, or at least limiting, the risk of ovalisation of tyres during long periods of vehicle inactivity.

A further object of the present invention is to provide a mover adapted to reduce, if not eliminate, the deterioration of discs and brakes while maintaining the efficiency thereof.

Another object of the present invention is to provide a mover capable of safeguarding the suspensions of vehicles which are stationary for a long time, eliminating the risk of creaking and/or vibration.

Said objects, as well as others which will become clearer below, are achieved by a mover of at least one wheel coupled to a vehicle in accordance with the following claims, which are to be considered an integral part of the present patent.

In particular, the mover comprises at least one actuator for lifting the wheel from the ground and at least one rotatable element, operatively connectable to said wheel, to rotate it.

According to another aspect of the invention, the rotatable element is operatively connected to at least one motor for the movement thereof.

According to a further aspect of the invention, the mover also comprises at least one activator of the motor to at least control the switching on and off thereof.

Advantageously, the mover of the invention is suitable for wheels coupled to vehicles since the actuator allows the wheel to be lifted from the ground, allowing it to be rotated.

Still advantageously, by lifting the wheel from the ground, the mover of the invention allows to eliminate, or at least limit, the ovalisation of the wheels during long periods of vehicle inactivity.

Furthermore, the mover of the invention rotates the wheel while still advantageously reducing the deterioration of discs and brakes of the vehicle due to inactivity.

Still advantageously, the mover of the invention also allows to reduce, if not eliminate, the wear of the suspensions of vehicles which are stationary for long periods, avoiding the generation of creaking and vibrations.

### Brief description of the drawings

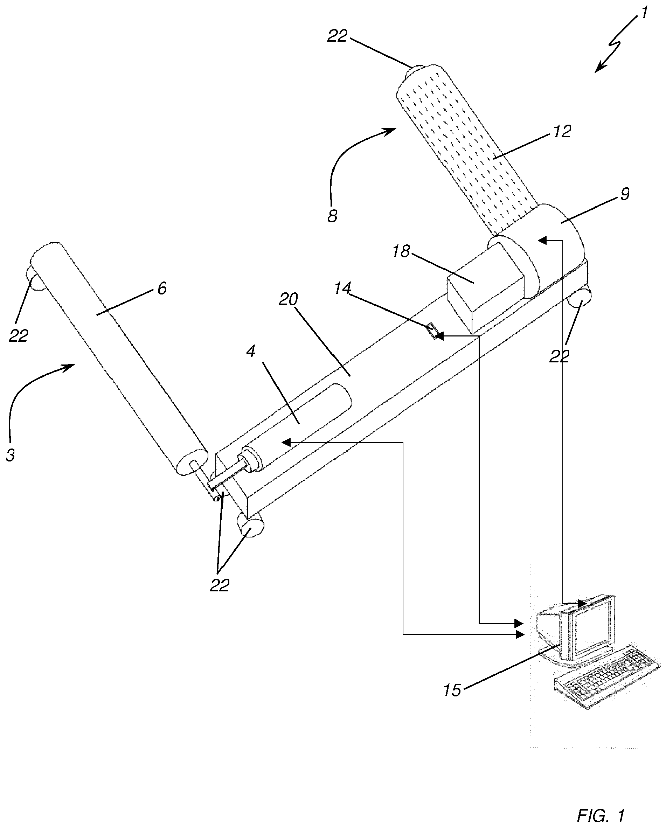

Further features and advantages of the invention will be more evident in the light of the detailed description of some preferred, but not exclusive, embodiments of a mover of at least one wheel coupled to a vehicle according to the invention, illustrated by way of non-limiting example with the aid of the accompanying drawings, in which FIG. 1 shows an axonometric view of the mover according to the invention.

### Detailed description of some preferred embodiments

With reference to the aforementioned figures, a mover 1 of a wheel coupled to a vehicle according to the invention is described. Obviously, the number of wheels to which the mover is applicable is not to be considered limiting for different embodiments of the invention.

According to an aspect of the invention, the mover **1** comprises an actuator **3** for lifting a wheel from the ground. Such an actuator **3** advantageously allows to move a wheel when it is coupled to any vehicle, for example, to a tractor, to an aircraft, to a car or to a motorcycle, making the mover **1** adapted to move wheels coupled to transport means.

According to the embodiment of the invention which is described, the actuator **3** comprises a jack **4** for lifting the wheel from the ground. Furthermore, the actuator **3** also comprises an idle cylinder **6** shaped to detachably couple to the wheel so as to lift it from the ground and then rotate integrally therewith.

In other words, by means of the jack **4,** the actuator **3** imparts a force to the idle cylinder **6** which, being coupled to the wheel, lifts it from the ground. Furthermore, the idle cylinder **6,** as mentioned, is free to move so that in the case of movement of the wheel it will move together therewith.

Obviously such aspects are not to be considered limiting for different embodiments of the invention such as in the event that the actuator comprises mechanical elements for lifting or in the event that the coupling with the wheel to be lifted is carried out by means of a hook.

Furthermore, according to an alternative embodiment of the invention, the lifting of the wheel from the ground occurs by coupling the actuator or a component thereof directly to the vehicle, for example positioning it at the lifting points typically used for lifting with a jack.

According to another aspect of the invention, the mover **1** of the invention also comprises a rotatable element **8** operatively connectable to the wheel in order to rotate it. Such a rotatable element **8** is also operatively connected to a motor **9** for the movement thereof.

According to the embodiment of the invention which is described, the rotatable element **8** comprises a cylinder **12** operatively connected to the motor **9** and shaped to adhere to the lifted wheel so as to impress a rotation by friction. Obviously such an aspect is not to be considered limiting for different embodiments of the invention where, for example, the rotatable element comprises spherical elements or devices shaped to transmit rotation to the wheel mechanically and not by friction.

According to a further aspect of the invention, the mover **1** also comprises an activator **14** of the motor **9** which allows to control the switching on and off of the latter.

Advantageously, by lifting the wheel from the ground, the mover **1** allows eliminating, or at least limiting, the problems of ovalisation of tyres during long periods of vehicle inactivity.

Furthermore, by rotating the wheel by means of the rotatable element **8,** the mover **1** still allows, advantageously, to reduce the deterioration of the vehicle by limiting the wear of discs, brakes and suspensions and, consequently, reduces the risk that the inactivity generates creaking and vibrations.

According to an alternative embodiment of the invention, not shown in the figure, the lifting of the wheel is carried out by both the actuator and the rotatable element.

In addition, according to the embodiment of the invention which is described, the mover **1** also comprises a logic unit **15** operatively connected to the motor **9** and the activator **14** for controlling and programming the switching on and off of the motor **9.**

Advantageously, by means of the logic unit **15** it is possible to plan the switching on of the motor **9** so as to rotate the wheel according to a predetermined program.

Obviously, such an aspect should not be considered limiting for different embodiments of the invention where, for example, the control of the motor and activator is carried out manually.

According to another aspect of the invention, the logic unit **15** is also operatively connected to the actuator **3.** Thereby, advantageously, it is also possible to control the lifting of the wheel from the ground by programming both the lifting and moving operations.

According to the embodiment of the invention which is described, the logic unit **5** is also capable of controlling the adjustment of the rotation speed impressed by the rotatable element **8** on the wheel. However, even such an aspect of the invention should not be considered limiting for different embodiments of the invention.

According to another aspect of the embodiment of the invention which is described, the mover **1** also comprises an electrical energy accumulator **18** operatively connected to the motor **9** for powering it electrically.

Advantageously, the accumulator **18** allows to use the mover **1** anywhere, without the need to position the vehicle near energy sources.

Obviously, such an aspect should not be considered limiting for different embodiments of the invention where, for example, the energy for the operation of the motor is supplied by a cable connected to the electricity grid.

According to another aspect of the embodiment of the invention which is described, the mover **1** comprises a support body **20** of the actuator **3** and of the rotatable element **8.** Such a body **20** is further provided with a plurality of rollers **22** for the displacement thereof.

Advantageously, the presence of a support body **20** allows an easier use of the mover **1** of the invention which can be easily transported, arranged below the wheel to be treated and operated. However, the presence of the support body is not limiting for embodiments of the invention; in fact, the components of the mover can be independent from each other.

Still advantageously, the rollers **22** allow to simplify the displacement of the invention. Obviously, also such an aspect must not be considered limiting for different embodiments of the invention where, for example, the support body is fixed or in the event that the displacement thereof is carried out by means of bearings or any element adapted to mobilise it.

Furthermore, according to the embodiment of the invention which is described, the rollers **22** are also coupled to the actuator **3** and the rotatable element **8.** Advantageously, the rollers **22,** in addition to the aforementioned facilitation of the transport of the mover **1,** allow to further stabilise the mover **1** while preserving the structural integrity of the components. Obviously, also such an aspect must not be considered limiting for different embodiments of the invention, where, for example, the stability of the mover is ensured by means of feet.

According to an alternative embodiment of the invention, not shown in the figure, the mover also comprises a remote control device of the logic unit.

Advantageously, this allows to control the switching on and switching off of the motor remotely, and if it is possible, also to lift the wheel.

The embodiment of such a remote control device must not be considered limiting for different embodiments of the invention where, for example, it consists of a remote control or a smartphone provided with a dedicated application.

According to an alternative embodiment of the invention, also not shown in the figure, the mover, whether before or after lifting the wheel, imparts a steer to the latter, turning it by a few degrees. Advantageously, this also allows the steering system of the vehicle to be kept active, reducing the aforementioned deterioration of discs, brakes and suspensions.

Operatively, the mover **1** of the invention first lifts the wheel of a vehicle by means of the actuator **3** and then rotates it through the rotatable element **8** driven by the motor **9.**

Advantageously, the mover **1** eliminates the risk of ovalisation of the wheel lifted from the ground and reduces the deterioration of discs, brakes and suspensions due to long periods of vehicle inactivity.

In light of the foregoing, it is understood that the mover of the invention achieves all the intended objects.

In particular, the mover of the invention is adapted to move wheels coupled to a vehicle.

Furthermore, the mover allows eliminating, or at least limiting, the risk of ovalisation of tyres.

In addition, the mover of the invention allows to reduce the deterioration of discs, brakes and suspensions caused by long periods of vehicle inactivity.

The invention might be subject to many changes and variants, which are all included in the appended claims. Moreover, all the details and steps may furthermore be replaced by other technically equivalent elements, and the materials may be different depending on the needs, without departing from the protection scope of the invention defined by the appended claims.

## Claims

1. A mover of at least one wheel coupled to a vehicle comprising:
- at least one actuator (**3**) for lifting the at least one wheel from the ground;
- at least one rotatable element (**8**) operatively connectable to the at least one wheel to rotate it, said rotatable element (**8**) being operatively connected to at least one motor (**9**) for the movement thereof;
- at least one activator (**14**) of said motor (**9**) at least to control the switching on and off thereof.

2. Mover according to claim 1, comprising at least one logic unit (**15**) operatively connected to at least said motor (**9**) and said activator (**14**) at least to control and program the switching on and off of said motor (**9**).

3. Mover according to claim 2, **wherein** said logic unit (**15**) is also operatively connected to said actuator (**3**) to control the lifting of the at least one wheel from the ground.

4. Mover according to one or more of the preceding claims, comprising at least one electrical energy accumulator (**18**) operatively connected to at least said motor (**9**) to power it electrically.

5. Mover according to one or more of the preceding claims, **wherein** said logic unit (**15**) is also capable of controlling the adjustment of the rotational speed impressed by said rotatable element (**8**) on the at least one wheel.

6. Mover according to one or more of the preceding claims, also comprising a remote-control device of said logic unit.

7. Mover according to one or more of the preceding claims, **wherein** said actuator (**3**) comprises a jack (**4**) for lifting the at least one wheel from the ground.

8. Mover according to one or more of the preceding claims, comprising at least one support body (**20**) of at least said actuator (**3**) and said rotatable element (**8**) and having a plurality of wheels (**22**) for the displacement thereof.

9. Mover according to any one of the preceding claims, **wherein** said actuator (**3**) comprises an idle cylinder (**6**) shaped to detachably couple to the at least one wheel so as to lift it from the ground and rotate integrally therewith.

10. Mover according to any one of the preceding claims, **wherein** said rotatable element (**8**) comprises a cylinder (**12**) operatively connected to said motor (**9**) and shaped to adhere to the at least one lifted wheel so as to impress rotation thereon by friction.
